# EUROPEAN PATENT APPLICATION

(11) **EP 4 653 790 A1**
(43) Date of publication of application: **26.11.2025**
(21) Application number: 25166212.8
(22) Date of filing: 26.03.2025
(51) Int. Cl.: F27B 7/20, C04B 7/36, C25B 1/04, F27B 7/34, F27B 7/42, F27D 17/10, F27D 17/20, F27D 19/00, C04B 7/44

(54) **RENEWABLE ENERGY FUELED INDUSTRIAL PLANTS WITH INTEGRATED CARBON CAPTURE**

(30) Priority: 23.05.2024 IN 202421040128
(71) Applicant: Tata Consultancy Services Limited, Maharashtra (IN)
(72) Inventor: DHAYAL, Akanksha, 411028 Pune, Maharashtra (IN); SUHAIL, Mohammed, 411028 Pune, Maharashtra (IN); SUBRAMANIAN, Sivakumar, 411028 Pune, Maharashtra (IN); RUNKANA, Venkataramana, 411028 Pune, Maharashtra (IN)
(74) Representative: Goddar, Heinz J.

(57) **Abstract**

Providing an implementable renewable fuel gas plant processes with management of greenhouse gases with minimal changes to existing plant set ups is a technical challenge to be addressed. Embodiments herein provide a system for renewable fuel gas generation and utilization in industrial plants with carbon dioxide as heat carrier. The system design integrates renewable fuel gas (H₂) which is generated within the system and utilized to meet the thermal energy requirements of the production process. CO₂ produced as byproduct of calcination in a process equipment, such as during calcination in cement plant is used as a heat-transferring medium to heat the H₂. Further, the system provides recycling of the generated byproducts by separating the exhaust gases, comprised of CO₂ and H₂O. The H₂O is recycled to generate H₂ via electrolysis. The separated CO₂ again serves as a heat-transferring medium, while the excess CO₂ is sequestrated.

## Description

### CROSS-REFERENCE TO RELATED APPLICATIONS AND PRIORITY

The present application claims priority from Indian patent application no. 202421040128, filed on 23 May 2024.

### TECHNICAL FIELD

The embodiments herein generally relate to the field of fossil fuel free approaches for industrial plant processes and, more particularly, to a system for renewable energy fueled industrial plants with integrated carbon capture.

### BACKGROUND

Majority of greenhouse gas emissions come directly from industrial sources, such as manufacturing, food processing, mining, and construction. On-site combustion of fossil fuels for heat and power, non-energy use of fossil fuels, and chemical processes used in iron, steel, and cement production result in direct emissions of greenhouse gases. Fossil fuels are the largest source of air pollution emissions globally. Thus, providing non-fossil fuel-based approaches to limit greenhouse gas emissions during operation of industrial processes as Carbon-dioxide (CO₂) is one of the major contributors of global warming is the need of the hour. Industrial plants for metal extraction from ores, cement manufacturing and the like are major industries that need to manage the greenhouse emissions.

For example, the cement industry is classified as a hard-to-abate industry from the decarbonization perspective due to its reliance on fossil fuels that release Carbon dioxide (CO₂) and the inherent release of CO₂ from limestone during calcination. Replacing fossils fuels with renewable fuel gas generation and utilization in industrial plants and also using carbon dioxide as heat carrier and sequestrating excess carbon dioxide is an area of research. There have been attempts at the concept level for using Hydrogen (H₂) as renewable fuel, however integrating H₂ in industrial plant processes such as cement plants without major changes in conventional plant design is hardly explained. Further, efficiently generating renewable H₂ for use in the plant is an unaddressed technical challenge.

Another challenge toward a sustainable environment that needs to be addressed at the industrial plants is elimination of CO₂ release into environment. The CO₂ may be result of burning fossil fuels used for the plant process or could be a byproduct of process itself such as calcination in cement plants. Thus, effective and efficient CO₂ management needs to be explored.

### SUMMARY

Embodiments of the present disclosure present technological improvements as solutions to one or more of the above-mentioned technical problems recognized by the inventors in conventional systems. For example, in one embodiment a system for renewable energy fueled industrial plants with integrated carbon capture is provided. The system for renewable fuel based industrial plant processes comprises one or more process equipment for a process of obtaining the product from a raw material, wherein heat required for the process is derived from a first gas and a second gas entering the one or more process equipment via an inlet. The first gas is a renewable fuel gas, functioning as a heat supplier, and the second gas functions as an oxidant. A third gas released as a primary byproduct of the process acts as a heat carrier to circulate heat during the process and carry one or more secondary byproducts released during the process through an outlet of the one or more process equipment. A gas separation and filtration unit separating the third gas and the secondary byproducts exiting from the outlet of the one or more process equipment. A gas supply unit to store the first gas and the second gas sourced from at least one of an internal gas regeneration unit and an external gas supply unit. The internal gas regeneration unit processes at least one of the secondary byproducts to regenerate at least one of the first gas and the second gas, wherein the first gas, and the second gas is recirculated into the one or more process equipment. The gas supply unit, sourcing the third gas from one of the gas separation and filtration unit and the external gas supply unit, wherein the third gas is recirculated to the one or more process equipment after heating up to a third predefined temperature at a heat recovery unit. The heat released during cooling the product at the heat recovery unit after exiting the one or more process equipment is transferred to heat the third gas.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an industrial plant process depicting a conventional basic cement plant utilizing fossil fuel for heat energy requirement.
FIG. 2 illustrates a system for renewable energy fueled industrial plants with integrated carbon capture, in accordance with some embodiments of the present disclosure.
FIG. 3 illustrates a heat and solid flow design loop of the system, in accordance with some embodiments of the present disclosure.
FIG. 4 is a functional block diagram of a controller that controls the temperature and a flow rate of a plurality of gases generated and recirculated within the system of FIG. 2, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Implementable renewable fuel gas plant processes with management of greenhouse gases such as Carbon dioxide (CO₂) with minimal changes to existing plant set ups needs to be explored.

Embodiments herein provide a system for renewable energy fueled industrial plants with integrated carbon capture.

The system disclosed herein is explained with cement plant as an example, with minimal modifications the present system can be applied to other similar industrial plants attempting to use renewable fuel while providing Carbon dioxide management for controlled release into environment.

The system design integrates renewable fuel gas such as hydrogen (H₂) throughout the entire industrial plant such as a cement plant. The renewable H₂ is generated within the system (industrial plant premises) and utilized to meet the thermal energy requirements of the production process. Carbon dioxide (CO₂) is produced as byproduct of calcination carried out within the cement plant this CO₂ can be used as a heat-transferring medium to heat the H₂. Further, the system provides recycling of the generated byproducts by separating the exhaust gases, comprised of CO2 and H2O. The H2O is recycled to generate H2 via electrolysis. The separated CO₂ again serves as a heat-transferring medium, while the excess CO₂ is sequestrated.

The use of renewable energy in the electrolysis of water makes the obtained H₂ green. Renewable energy when available can be used to produce and store H₂.

The system disclosed provides better control of the fuel distribution in pre-calciner and rotary kiln, unlike fossil fuels such as coal. Hydrogen being a gaseous fuel, could be distributed along the length in the kiln, enhancing the control over the temperature inside the kiln.

The system herein provides better CO₂ capture and utilization. The CO₂ herein is used as a heat carrier and also formed in the reactions. The process allows cleaner separation of CO₂ from the flue gas as the other primary constituent is H2O. Excess CO₂ generated in the process can be redirected for utilization or sequestration.

The energy and mass balance calculations for multiple process equipment such as preheater, calciner, rotary kiln and heat recovery units such as cooler etc., for the example cement plant are provided to understand the renewable fuel heat transfer or thermal energy flow mechanism. Also, provided are energy and mass balance calculations for electrolysis unit that regenerates H₂ and O₂ from exhaust gases.

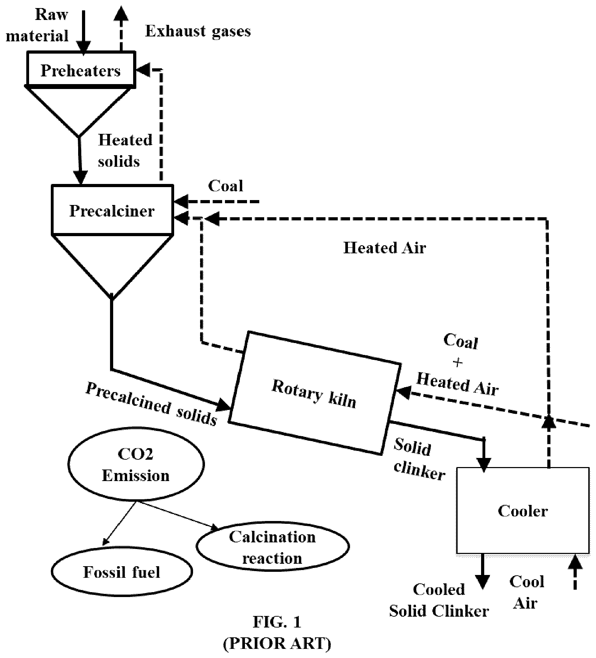

Referring now to the drawings, and more particularly to FIGS. 1 through 4, where similar reference characters denote corresponding features consistently throughout the figures, there are shown preferred embodiments, and these embodiments are described in the context of the following exemplary system and/or method.

Traditionally, as depicted in FIG. 1, the industry is reliant on fossil fuels and characterized as energy-intensive; cement production is undergoing a transformative shift to address environmental concerns. In response to global challenges like climate change, pollution, and resource depletion, the industry is actively transitioning towards renewable energy sources.

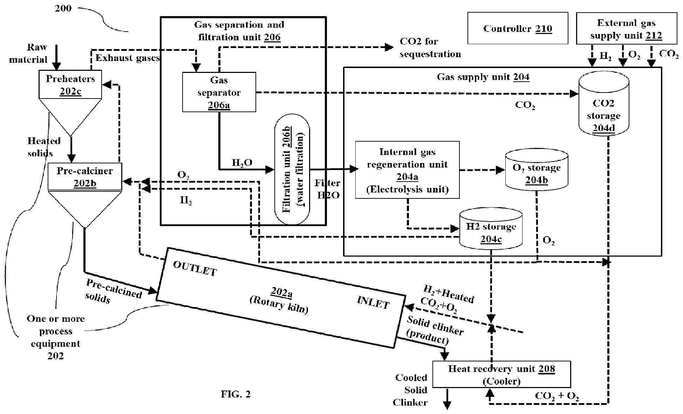

FIG. 2 illustrates a system 200 for renewable fuel gas generation and utilization in industrial plants with carbon dioxide as heat carrier, in accordance with some embodiments of the present disclosure. Thus, the system 200 disclosed herein revolutionizes industrial plant processes, for example, the cement production process. This system 200 disclosed herein focuses on incorporating hydrogen (H₂) combustion as a green fuel within cement plants. It can be complemented by other green fuels such as biomethane, and bio-oils. Positioned as a sustainable alternative to conventional fossil fuels, the integration of H₂ combustion serves as a crucial strategy to significantly reduce carbon dioxide (CO₂) emissions associated conventionally with cement production. Further, the CO₂ emitted by the calcination of limestone can be fully captured from the flue gas through a simple process as the other primary constituent of this stream would be water. This forward-looking approach aims to tackle environmental challenges inherent in the traditional cement-making process, marking a pivotal step towards sustainable and eco-friendly cement manufacturing.

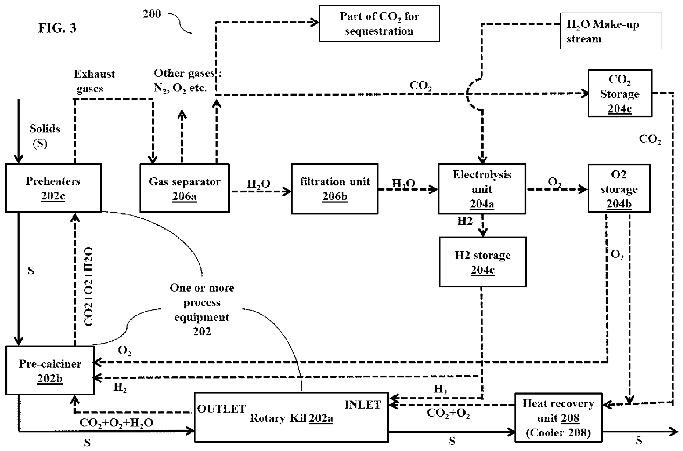

The architecture of the system 200 depicted in FIG. 2 is applicable for a multitude of industrial plant processes. FIG. 2 and FIG. 3 depict industrial plant process, as an example, wherein cement manufacturing plant system design is detailed for better understanding of implementation of system 200.

As depicted in FIG. 2, one or more process equipment 202 process a raw material to obtain the product such as cement. The heat required for the process is derived from a first gas and a second gas entering the one or more process equipment (202) via an inlet. The first gas is a renewable fuel gas, functioning as a heat supplier, and the second gas functions as an oxidant. The first gas, for example, in the cement plant can be hydrogen (H₂) or methane (CH₄) obtained from biomenthanation processes.

The substitution of fossil fuel for hydrogen (H₂) fuel as a cleaner and more sustainable energy source for the entire process is a crucial substitution. Depending on the burner design the system 200 can accept other biofuels including biomethane to complement H₂. Another distinction is that the system 200 can use oxyfuel to ease the CO₂ enrichment challenges facilitating ready carbon capture from the flue gas. This shift necessitates modifications in the process, emphasizing a proactive approach to mitigate the environmental impact of CO2.

The renewable gas is recirculated into the one or more process equipment 202 at a temperature below ignition temperature of the renewable fuel gas. For example, it may be better to introduce H₂ at a temperature below room temperature or at room temperature to improve the process safety.

The second gas may be, for example air, providing required O₂. The flue gas contains a significant quantity of O₂ coming from the air that is used as an oxidant for burning fossil fuels, making the capture of CO₂ from the flue gas harder. The industry has been exploring many ways of minimizing greenhouse gas emissions. The system 200 of the present disclosure reduces it significantly and facilitates the capture of inherent emissions.

A third gas released as a primary byproduct of the process acts as a heat carrier to circulate heat during the process and carry one or more secondary byproducts released during the process through an outlet of the one or more process equipment 202. A gas separation and filtration unit 206 separates the third gas and the one or more secondary byproducts exiting from the outlet of the one or more process equipment 202. The excess amount of the third gas, which is carbon dioxide (CO₂), that exits the gas separation and filtration unit is sequestrated. A gas supply unit 204 stores the first gas and the second gas sourced from at least one of an internal gas regeneration unit 204a and an external gas supply unit 212. The internal gas regeneration unit 204a processes at least one of the secondary byproducts to regenerate at least one of the first gas and the second gas. The first gas, and the second gas is recirculated into the one or more process equipment 202. The gas supply unit 204 sources the third gas from one of the gas separation and filtration unit 206 and the external gas supply unit 212. The third gas is recirculated to the one or more process equipment 202 after heating up to a third predefined temperature at a heat recovery unit 208. The heat released during cooling the product at the heat recovery unit 208 after exiting the one or more process equipment 202 is transferred to heat the third gas.

As mentioned and depicted in FIG. 2 and FIG. 3, the example industrial plant is the cement plant, wherein the one or more process equipment 202 comprise one or more preheaters 202c, to obtain a preheated feed from the raw material comprising a raw meal feed entering the one or more preheaters, a pre-calciner 202b for calcination of the preheated feed to obtain a partially calcined raw meal, a rotary kiln 202a for clinkerization to obtain the product in the form of a clinker from the partially calcined raw meal, and the heat recovery unit 208 in form of a cooler to obtain the product in form of a clinker product by cooling the clinker.

The internal gas regeneration unit 204a processes the one or more secondary byproducts comprising the steam (H₂O) via the electrolysis at the internal gas regeneration unit (204a) or the electrolysis unit to generate the first gas comprising the renewable fuel gas hydrogen (H₂), and the second gas (e.g., oxygen (O₂)). The third gas functions as the heat carrier produced and is the primary byproduct of calcination is carbon dioxide (CO₂).

As H₂ is used as fuel along with pure O₂ as oxidant, flue gas primarily comprises of H₂O and CO₂. The CO₂ concentration may need to be higher as it is recirculated to act as a heat carrier in the process loop. The separation of CO₂ and H₂O can be easily carried out through simple room temperature cooling. The excess CO₂ generated in the limestone calcination can be stored, utilized/sold, or sent for sequestration. The process not only reduces the quantum of CO₂ emitted in the traditional process, but it offers a simpler way to recover it from the flue gas.

Renewable Hydrogen Production: The utilization of renewable hydrogen in the cement manufacturing process serves as a noteworthy aspect of the invention. This clean energy source contributes significantly to environmental sustainability, aligning with global efforts to reduce carbon emissions and address climate change challenges. It is important to note that the electrolysis process to obtain H2 and O₂ may be carried out only when renewable energy is available and stored for later use. Thus, alleviating some of the challenges associated with renewable energy.

In an embodiment biogases may be used as renewable fuel source, along with H2. The feasibility of integrating biogases, particularly methane from industrial, municipal, and agricultural waste, into oxyfuel technology enhances its environmental advantages. When methane is combined with pure O₂ for combustion, the resulting flue gas consists mainly of H₂O and CO₂. Like when using H₂ as fuel, the produced CO₂ can be separated and stored. This inclusion of biogases not only decreases dependence on fossil fuels but also has the potential for carbon negativity. By capturing CO₂ released during combustion, this technology effectively removes carbon from the atmosphere. Leveraging both H₂ and CH₄ fuels in oxyfuel technology presents a holistic approach to achieving carbon neutrality and promoting sustainable industrial practices.

This system 200 is validated using a rigorous mathematical model based simulations for a rotary kiln, a key equipment in the cement-making process. It establishes the practicability of the invention as it uses realistic and updated reaction kinetics of the solid phase and gas phase reactions. Notably, the generated CO₂ during calcination serves a dual role by acting as a heat carrier within the plant and enabling its utilization within the facility. In fact, more CO₂ is circulated back into the process loop to serve this purpose, wherein in the conventional systems, the role of heat carrier was played by Nitrogen (N₂). Any surplus CO₂ is earmarked for sequestration or utilization, contributing to environmental conservation. The adoption of H₂ fuel as the primary energy source results in a substantial reduction in gas exhaust elements compared to conventional fossil fuels, showcasing a commitment to environmental sustainability and the optimization of overall process efficiency.

Further, an electronic control system is used to control the flow rate, temperature, and valve control of each of the units via controller 210. The controller 210 comprises a memory 402 storing instructions; one or more Input/Output (I/O) interfaces 406; and one or more hardware processors 404 coupled to the memory 402 via the one or more I/O interfaces (406). The one or more hardware processors (404) are configured by the instructions to:
1. Control the temperature of the first gas, the second gas and the third gas via the one or more preheaters 202c.
2. Control a flow rate or pressure of the first gas, the second gas and the third gas when is discharged through the one or more preheaters 202c, the pre-calciner 202b, the rotary kiln 202a and the cooler 208, wherein control of the flowrate or the pressure is performed through operations of fans, compressors, or blowers.

Table 1 below provides temperature and flow rates for the cement plant.

Other industrial applications of this approach can be calcination of alumina, calcination of limestone, etc. The process may be carried out in different contact equipment, such as rotary kilns, fixed bed reactors, moving bed reactors, or fluidized bed reactors. The specific requirements of a particular industrial plant may need minimal changes to the main system design and fall within the scope of the renewable fuel gas generation and utilization in industrial plants with carbon dioxide as heat carrier disclosed herein by the general architecture of the system 200. Also as understood, one or more process equipment 202, gas supply unit 204, internal gas regeneration unit 204a, gas separation and filtration plant 206, heat recovery unit 208, and other units may vary based on the plant process.

FIG. 3 illustrates a heat and solid flow design loop of the system 200 for the cement plant, in accordance with some embodiments of the present disclosure.

The design of the cement manufacturing plant or dry cement clinker, conventionally in modem dry cement clinker production is based on a dry process, pulverized fuel is burnt inside a rotary kiln and pre-calciner to provide the required thermal energy.

Cement production within rotary kilns has long been an energy-intensive process reliant on fossil fuels, contributing significantly to global environmental challenges such as climate change, pollution, and resource depletion. The paradigm shift toward cleaner, renewable energy sources is crucial for the industry's sustainable future. Technological advancements, with a heightened focus on environmental considerations, aim to address the pressing issue of carbon dioxide (CO₂) emissions, particularly within the cement sector. The cement industry alone accounts for a substantial share of approximately 1.5 gigatons of CO₂ emissions, out of the global total of 30 gigatons. The system 200 of FIG. 2 and FIG. 3 disclosed herein centers on the integration of hydrogen (H₂) combustion as a green fuel within cement plants. H2 combustion, recognized for its potential to eliminate carbon monoxide and carbon dioxide emissions, emerges as a pivotal strategy to mitigate CO₂ emissions significantly. Alternative fuels, such as waste oils, plastics, and tires, have been explored, but they pose challenges, including excessive volatiles and equipment deposition issues. The use of clean fuel becomes imperative to reduce harmful emissions. Hydrogen, especially when mixed with natural gas for combustion, emerges as a promising solution to minimize environmental impact. However, challenges such as elevated NOx emissions and safety concerns need to be addressed due to hydrogen's unique properties. Studies have delved into the combustion behavior of hydrogen in various systems. An integrated cement production system utilizing H₂ as fuel, coupled with NH₃ dehydrogenation, presents a promising thermodynamic analysis. This system 200 efficiently utilizes H₂ combustion for endothermic reactions, contributing to clinker production. Additionally, hydrogen-enriched natural gas and novel concepts like the Argon power cycle showcase the versatility of H₂ combustion in diverse applications. In this groundbreaking process, hydrogen takes center stage as the primary energy source for cement-making. The intentional utilization of CO₂, generated from calcination, to dilute the H₂ fuel stream strategically channels energy flow throughout the entire process. The carefully selected units (mentioned in FIG. 1) in the process flow diagram play specific roles based on scientific considerations, marking a significant leap towards sustainable and eco-friendly cement production.
**1. Heat recovery unit 208 or Cooler 208:** The grate cooler, a variant of clinker coolers, holds significance in the clinker manufacturing process. Operating within a cement plant, it is responsible for both cooling and conveying the cement clinker from the rotary kiln. Additionally, the grate cooler supplies heated air (secondary air) to the rotary kiln and preheater. In this innovation, the mentioned unit plays a crucial role in heat recovery from solids exiting the rotary kiln. This recovered energy is then employed to preheat the CO₂ and O₂ before it is introduced into the rotary kiln. As indicated in FIG. 2 and FIG. 3, the cooler receives CO₂ from the CO₂ storage unit and O₂ from the O₂ storage unit, preheats them, and subsequently directs them to the rotary kiln.
**2. Rotary kiln 202a:** A rotary kiln is a sizable operational component in cement production. It operates by subjecting limestone to high temperatures, leading to its complete decomposition into calcium oxide. This process lays the foundation for the creation of cement clinker particles. In this setting, all clinkerization reactions occur, involving a combination of both endothermic and exothermic reactions. The total heat required to drive these reactions is approximately 300 KJ/kg clinker, with 67 of the calcination reaction taking place in the calciner and the remaining reactions occurring in the rotary kiln. The solids and gas streams move in a counter-current manner within the kiln, exchanging heat and mass along its length. At the discharge end of the kiln, the preheated gas stream from the cooler 208 and the H₂ stream from the H₂ storage unit are injected. Subsequently, H₂ combustion takes place, providing approximately 1000 KJ/kg clinker for the flow rate of 0.27 kg/sec. This energy is utilized to heat the solids, with a portion devoted to facilitating reactions and another portion contributing to environmental losses. The heated clinker exits the rotary kiln 204a and is fed to the cooler 208, and all the gases proceed towards the calciner unit, characterized by elevated temperatures.
**3. Pre-calciner 202b:** The pre-calciner, alternatively referred to as a cement calciner, represents a high-efficiency cement apparatus for direct combustion and solid-gas heat exchange. It disperses and suspends the powder of cement raw meal in airflow, facilitating rapid combustion of fuel and decomposition of calcium carbonate. This unit plays a crucial role in completing a segment of the calcination reaction before entering the rotary kiln. During this process, a gas stream is introduced from the rotary kiln 204a, and an accompanying H₂ stream is injected to supply energy. The overall energy required for both raising the temperature of solids and accomplishing the 67 calcination reaction is approximately 1470 KJ/kg clinker. Of this, about 930KJ/kg clinker is provided by H₂ combustion. The remaining energy is complemented by the hot gas stream originating from the kiln. The exhaust gas stream is directed to the preheaters 204c, while the solids proceed to the rotary kiln as the feed.
**4. Preheaters 202c:** For example, cyclone preheaters, also known as suspension preheaters, play a crucial role in the dry process of cement manufacturing. In this process, it is imperative to preheat the raw meal in the preheater before it undergoes calcination in the rotary kiln 202a. The efficiency and performance of the preheaters 202c in a cement plant have a direct impact on the stability of calcining temperature and the quality of the resulting cement clinker in the kiln. This unit serves as a crucial element in heat transfer, increasing the temperature of the solids before they enter the pre-calciner. This is achieved by recovering heat from the gas stream from pre-calciner. Subsequently, these gases are conveyed to the gas separation plant, where the process involves separation of CO₂ and water vapor (H₂O) from the other gaseous elements.
**5. Gas separator 206a:** This unit is an essential addition compared to conventional cement plants. Its primary function is to facilitate the separation of CO₂ and H₂O from the exhaust gas stream. From this unit, the H₂O stream is directed to the water filtration unit 206b before being sent to electrolysis, while the CO₂ is conveyed to the CO₂ storage unit. Additionally, a portion of the CO₂ is channeled into the sequestration process for future use of captured CO₂.
**6. Filtration unit 206b** for water filtration: This unit plays a critical role in the process, especially before sending the H₂O into electrolysis (H₂O is split into H₂ and O₂). In this unit, water undergoes thorough purification before being directed to the subsequent stage.
**7. Internal gas regeneration unit 204a for example Electrolysis unit 204a:** Water electrolysis is a method in which water undergoes splitting into hydrogen and oxygen through the application of electrical energy. The overall energy required in the case of H₂ integration for the entire cement plant is around 4254 KJ / Kg clinker apart from the feed preparation and cooler griding energy consumption. This process utilizes various renewable energy feedstocks and is feasible with currently available technology. After this unit, both hydrogen (H₂) and oxygen (O₂) are stored in dedicated storage units. These stored gases can be utilized as needed, based on the energy requirements within the overall process.
**8. O2 storage 204b:** Similar to other storage units, it serves a similar purpose in the overall process.
**9. H2 storage 204c:** This unit is designed for the storage of hydrogen generated through the electrolysis process. The storage can be facilitated by Cryogenic storage tanks, ensuring the availability of hydrogen for utilization whenever the demand arises.
**10. CO2 storage 204d:** This unit functions as a storage facility for CO₂ obtained from the gas separation plant. The stored CO₂ is then supplied to the cooler unit and rotary kiln based on the specific requirements of the cement-making process.

Hydrogen production through water electrolysis, particularly with renewable energy sources, offers a clean and efficient method. Advancements in PEM water electrolysis technology focus on enhancing catalyst efficiency and system performance while integrating renewable energy. This approach yields high-purity hydrogen, emits no pollutants, and allows for the utilization of various renewable energy sources. Widely applied in industrial settings, water electrolysis for hydrogen production is cost-effective, with expenses dependent on the efficiency of renewable electricity sources like solar, tidal, geothermal, and wind energy. The unit-wise energy calculation in Table 1 and the energy required from H₂ combustion in the calciner and rotary kiln units in Table 2 highlight the higher total energy demand for these processes compared to conventional fossil fuels due to the efficiency of electrolysis. The adaptability of hydrogen to replace fossil fuels in cement plants is feasible with the implementation of additional precautions and control measures. While the energy requirements for the current electrolysis process may be high, ongoing advanced research aims to decrease the cost of hydrogen production and improve efficiency. An advantage of this method lies in the utilization of CO₂ generated from the calcination reaction within the same process by introducing it as a diluent to the gas stream. The approach provided by the system 200 disclosed herein has the potential to reduce overall CO2 emissions from the cement-making process by approximately.

The energy and mass balance calculations for multiple process equipment such as preheater, calciner, rotary kiln and heat recovery units such as cooler etc., for the example cement plant are provided in Table 1 to understand the renewable fuel heat transfer or thermal energy flow mechanism. Also, provided are energy and mass balance calculations for electrolysis unit are provided in Table 2, with respect to regeneration of H₂ and O₂ via electrolysis of exhaust gases (H₂O or steam).

**Table 1**

| **Description** | **Preheater** | **Pre-calciner** | **Rotary** | **Cooler** |
|---|---|---|---|---|
| Solid inlet temperature, K | 300 | 1100 | 1200 | 1700 |
| Solid mass flow rate, kg/s | 50 | 50 | 38 | 32 |
| Gas stream inlet temperature, K | 1097 | 1390 | 1435 | 300 |
| Gas stream inlet flow rate, kg/s | 58 | 58 | 36 | 34 |
| CO₂ produced (from calcination reaction), kg/s | - | 12 | 5.8 | - |
| H₂ inlet temperature, K | - | 300 | 300 | - |
| H₂ flowrate, kg/s | - | 0.25 | 0.27 | - |
| Combustion of H₂, KJ/ kg clinker | - | 930 | 1004 | - |
| Heat of reaction, KJ/kg clinker | - | 1469 | 301 | - |

**Table 2**

| | |
|---|---|
| H₂ flow rate required to fulfill the energy for the entire cement plant [Rotary kiln + Pre-calciner] | **0.52** kg/s |
| Efficiency of the electrolysis | **67-82** % |
| Energy consumption [kWh/kgH_{2]} | **47-63** kWh/kgH₂ |
| Total energy required to supply the hydrogen | 266000 KJ/kg H₂ X 0.52 kg/sec |
| | = 139000 KJ/sec |
| | **= 139 MW** |
| | = 4254 KJ / Kg clinker |
| Energy required in the coal case (Only from coal combustion) | = 89182 KJ/sec |
| | **= 90 MW** |
| | = 2624 KJ/kg clinker |
| 0.52 Kg/sec H₂ produced clinker (Kg/sec) | 32.51g clinker/sec |

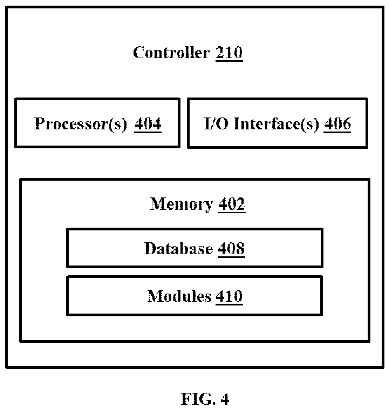

FIG. 4 is a functional block diagram of a controller 210 that controls the temperature and the flow rate of a plurality of gases generated and recirculated within the system of FIG. 2, in accordance with some embodiments of the present disclosure.

In an embodiment, the controller 210 includes a processor(s) 404, communication interface device(s), alternatively referred as input/output (I/O) interface(s) 406, and one or more data storage devices or a memory 402 operatively coupled to the processor(s) 404. The controller 102 with one or more hardware processors is configured to execute functions of one or more functional blocks of the controller 222.

Referring to the components of controller 210, in an embodiment, the processor(s) 404, can be one or more hardware processors 404. In an embodiment, the one or more hardware processors 404 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 404 are configured to fetch and execute computer-readable instructions stored in the memory 402. In an embodiment, the controller 202 can be implemented in a variety of computing systems including laptop computers, notebooks, hand-held devices such as mobile phones, workstations, mainframe computers, servers, and the like.

The I/O interface(s) 406 can include a variety of software and hardware interfaces, for example, a web interface, a graphical user interface to display the heating medium temperature and flow rates acquired via a set of sensors monitoring the process of the system 200. The I/O interface 406 can facilitate multiple communications within a wide variety of networks N/W and protocol types, including wired networks, for example, LAN, cable, etc., and wireless networks, such as WLAN, cellular and the like. In an embodiment, the I/O interface (s) 406 can include one or more ports for connecting to a number of external devices or to another server or devices.

The memory 402 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 402 includes a plurality of modules 410 such as modules for temperature, flow monitoring of the heating medium. The plurality of modules 410 further include programs or coded instructions that supplement applications or functions performed by the controller 210 for executing different steps involved in the process of the inert gas based direct heating for the industrial plant process, being performed by the controller 210. The plurality of modules 410, amongst other things, can include routines, programs, objects, components, and data structures, which performs particular tasks or implement particular abstract data types. The plurality of modules 410 may also be used as, signal processor(s), node machine(s), logic circuitries, and/or any other device or component that manipulates signals based on operational instructions. Further, the plurality of modules 810 can be used by hardware, by computer-readable instructions executed by the one or more hardware processors 404, or by a combination thereof.

Further, the memory 402 may comprise information pertaining to input(s)/output(s) of each step performed by the processor(s) 404 of the controller 210 and methods of the present disclosure. Further, the memory 402 includes a database 408. The database (or repository) 408 may include a plurality of abstracted pieces of code for refinement and data that is processed, received, or generated as a result of the execution of the plurality of modules in the module(s) 410.

Although the database 408 is shown internally to the controller 210, it will be noted that, in alternate embodiments, the database 408 can also be implemented external to the controller 210, and communicatively coupled to the controller 210. The data contained within such external database may be periodically updated. For example, new data may be added into the database (not shown in FIG. 4) and/or existing data may be modified and/or non-useful data may be deleted from the database. In one example, the data may be stored in an external system, such as a Lightweight Directory Access Protocol (LDAP) directory and a Relational Database Management System (RDBMS).

The controller 210 configured by the instructions to control the temperature of the heating medium to the plurality of predefined temperatures. Further is configured to control the flow rate or the pressure of the heating medium when the heating medium is discharged through the one or more preheaters 202c, the pre-calciner 202b, and the rotary kiln 202a in accordance with the heating medium flow design loop, wherein control of the flowrate or the pressure is performed through operations of fans or blowers in the heating medium flow design loop.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

Thus, the system disclosed herein revolutionizes industrial plant processes, for example, the cement production process. Traditionally, the industry is reliant on fossil fuels and characterized as energy-intensive, cement production is undergoing a transformative shift to address environmental concerns. In response to global challenges like climate change, pollution, and resource depletion, the industry is actively transitioning towards renewable energy sources. This system disclosed herein focuses on incorporating hydrogen (H₂) combustion as a green fuel within cement plants. It can be complemented by other green fuels such as biomethane, and bio-oils. Positioned as a sustainable alternative to conventional fossil fuels, the integration of H₂ combustion serves as a crucial strategy to significantly reduce carbon dioxide (CO₂) emissions associated conventionally with cement production. Further, the CO₂ emitted by the calcination of limestone can be fully captured from the flue gas through a simple process as the other primary constituent of this stream would be water. This forward-looking approach aims to tackle environmental challenges inherent in the traditional cement-making process, marking a pivotal step towards sustainable and eco-friendly cement manufacturing.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A system (200) for renewable fuel based industrial plant processes, the system (200) comprising:
one or more process equipment (202) for a process of obtaining a product from a raw material, wherein heat required for the process is derived from a first gas and a second gas entering the one or more process equipment (202) via an inlet,
wherein the first gas is a renewable fuel gas, functioning as a heat supplier, and the second gas functions as an oxidant, and
wherein a third gas is released as a primary byproduct of the process and acts as a heat carrier to circulate the heat during the process and carry one or more secondary byproducts released during the process through an outlet of the one or more process equipment (202);
a gas separation and filtration unit (206) separating the third gas and the one or more secondary byproducts exiting from the outlet of the one or more process equipment (202); and
a gas supply unit (204) to store the first gas and the second gas sourced from at least one of an internal gas regeneration unit (204a) and an external gas supply unit (212),
wherein the internal gas regeneration unit (204a) processes at least one of the one or more secondary byproducts to regenerate at least one of the first gas and the second gas,
wherein the first gas, and the second gas is recirculated into the one or more process equipment (202),
the gas supply unit (204), sourcing the third gas from one of i) the gas separation and filtration unit (206) and ii) the external gas supply unit (212), wherein the third gas is recirculated to the one or more process equipment (202) after heating up to a predefined temperature at a heat recovery unit (208), wherein heat released during cooling the product at the heat recovery unit (208) after exiting the one or more process equipment (202) is transferred to heat the third gas.

2. The system (200) as claimed in claim 1, wherein the renewable fuel gas is hydrogen (H₂) obtained by an electrolysis of water or steam at the internal gas regeneration unit using renewable electricity.

3. The system (200) as claimed in claim 1, wherein the renewable fuel gas is methane (CH₄) obtained from one or more biomethanation processes.

4. The system (200) as claimed in claim 1, wherein the renewable gas is recirculated into the one or more process equipment (202) at a temperature below an ignition temperature of the renewable fuel gas.

5. The system (200) claimed in claim 1, where in the second gas is air, and is recirculated to the one or more process equipment (202) after heating up to a predefined temperature at the heat recovery unit (208).

6. The system (200) as claimed in claim 1, wherein an excess amount of the third gas exiting the gas separation and filtration unit is carbon dioxide (CO₂), and wherein the excess CO₂ is sequestrated.

7. The system (200) as claimed in claim 1, wherein the system is a cement plant, and wherein
the one or more process equipment (202) comprise one or more preheaters (202c), to obtain a preheated feed from the raw material comprising a raw meal feed entering the one or more preheaters (202c), a pre-calciner (202b) for calcination of the preheated feed to obtain a partially calcined raw meal, a rotary kiln (202a) for clinkerization to obtain the product in the form of a clinker from the partially calcined raw meal, and the heat recovery unit (208) in form of a cooler to obtain the product in form of a clinker product by cooling the clinker;
the internal gas regeneration unit (204a) processes the one or more secondary byproducts comprising steam (H₂O) via an electrolysis process at the internal gas regeneration unit (204a) to generate the first gas comprising the renewable fuel gas hydrogen (H₂), and the second gas oxygen (O₂), and
the third gas functioning as the heat carrier is a is the primary byproduct of calcination and is carbon dioxide (CO2); and
a controller (210) comprising:
a memory (402) storing instructions;
one or more Input/Output (I/O) interfaces (406); and
one or more hardware processors (404) coupled to the memory (402) via the one or more I/O interfaces (406), wherein the one or more hardware processors (404) are configured by the instructions to:
control the temperature of the first gas to, the second gas and the third gas via of the one or more preheaters (202c), and
control a flow rate or pressure of the first gas, the second gas and the third gas when discharged through the one or more preheaters (202c), the pre-calciner (202b), the rotary kiln (202a) and the heat recovery unit (208), wherein control of the flowrate or the pressure is performed through operations of fans, compressors, or blowers comprised therein.
